# FASCICULE DE BREVET EUROPEEN

(11) **EP 0 592 323 B1**
(45) Date de publication et mention de la délivrance du brevet: **06.08.1997**
(21) Numéro de dépôt: 93402480.3
(22) Date de dépôt: 08.10.1993
(51) Int. Cl.: F25J 3/04, C01B 21/04

(54) **Procédé et installation de production d'azote ultra-pur sous pression**
Verfahren und Einrichtung zur Herstellung von extrem reinem Stickstoff unter Druck
Process and apparatus for the production of ultra-pure nitrogen under pressure

(30) Priorité: 09.10.1992 FR 9212012
(43) Date de publication de la demande: 13.04.1994
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Brugerolle, Jean-Renaud, F-75016 Paris (FR)
(74) Mandataire: Mercey, Fiona Susan

(56) Documents cités:
- EP-A- 0 454 531
- PATENT ABSTRACTS OF JAPAN vol. 014, no. 235 (M-0975)18 Mai 1990 & JP-A-02 061 481 (HITACHI) 1 Mars 1990
- PATENT ABSTRACTS OF JAPAN vol. 016, no. 549 (M-1338)18 Novembre 1992 & JP-A-04 208 385 (DAIDO SANSO)

## Description

La présente invention est relative à un procédé tel que défini dans le préambule de la revendication 1 et connu du document JP-A-0261481 et une installation de production d'azote ultra-pur sous pression.

L'industrie électronique exige la fourniture en continu d'azote ultra-pur, ayant typiquement une pureté de l'ordre de 1 à 100 ppb (parties par milliard ou 10⁻⁹) par impureté.

Dans la technique habituelle, on produit directement de l'azote ultra-pur dans une installation de distillation d'air dite "HPN (High Purity Nitrogen) de type électronique". Il s'agit d'une colonne de production d'azote dans lequel l'air comprimé, épuré à chaud en hydrogène et en monoxyde de carbone par voie catalytique puis épuré par adsorption en eau et en dioxyde de carbone, est refroidi au voisinage de son point de rosée, puis introduit à la base d'une colonne de distillation ayant un nombre de plateaux théoriques suffisant pour produire l'azote ultra-pur en tête. La colonne est équipée d'un condenseur de tête refroidi par du "liquide riche" (air enrichi en oxygène) recueilli en cuve et détendu.

L'installation est pourvue de moyens de liquéfaction d'une partie de l'azote ultra-pur, et cet azote liquide est envoyé à un stockage de secours. En cas de panne de l'installation ou de coupure de courant électrique, ce stockage permet d'assurer la continuité de la fourniture d'azote ultra-pur.

Cette technique présente de sérieux inconvénients :
- si la panne se prolonge, le stockage va se vider. Il faut donc un stockage très volumineux, qui coûte très cher : 200 000 litres pour fournir 1 000 Nm³/h pendant 4 jours, qui n'est pourtant pas la durée maximale des pannes constatées ;
- aucune solution commode n'existe si le stockage est vide, puisqu'on ne peut faire appel à de l'azote liquide ordinaire ou à moyenne pureté, c'est-à-dire ayant une pureté moyenne de l'ordre du ppm (partie par million ou 10⁻⁶) ;
- quand le stockage s'est vidé à la suite d'une panne de l'installation, il faut de nouveau le remplir, ce qui prend beaucoup de temps. Par exemple, si l'installation produit 7 % de l'azote ultra-pur sous forme liquide, il faut deux mois pour reconstituer la réserve (200 000 litres) après 4 jours d'arrêt de l'installation. Pendant cette période, l'ensemble du système est vulnérable.

JP-A-0261481 décrit un procédé de production d'azote dans lequel une colonne d'épuration est alimentée soit par un stockage d'azote liquide, soit par une colonne de distillation. Le condenseur de tête de la colonne d'épuration 2 n'est refroidi qu'avec le liquide riche provenant de la cuve de cette colonne.

L'invention a pour but de fournir une solution plus fiable au problème de la livraison continue d'azote ultra-pur.

A cet effet, l'invention a pour objet un procédé de production d'azote ultra-pur sous pression dans lequel :
- on produit de l'azote à moyenne pureté dans une installation de l'air sensiblement sous la pression de production ;
- on envoie cet azote à la base d'une colonne de distillation équipée d'un condenseur de tête ;
- on refroidit ce condenseur de tête au moyen de liquide de cuve de la colonne détendu et/ou d'un premier débit d'azote liquide à moyenne pureté contenu dans un réservoir de stockage ;
- on soutire l'azote ultra-pur de production en tête de la colonne ; et
- pendant les périodes d'arrêt de la production d'azote à moyenne pureté et pendant les périodes où la demande en azote ultra-pur est excessive par rapport à cette production, on envoie à la base de la colonne de l'azote gazeux de réserve à moyenne pureté obtenu à partir de l'azote liquide dudit réservoir de stockage ; et caractérisé en ce:
- on envoie l'azote à moyenne pureté, produit dans l'installation de l'air directement dans la colonne de distillation sous forme gazeuse ;
- on envoie dans le condenseur de tête un second débit, supérieur audit premier débit s'il y en a un, d'azote liquide de ce réservoir ; et
- on valorise par la vaporisation d'azote liquide provenant du réservoir, l'azote gazeux produit.

Suivant des modes particuliers de réalisation de l'invention:
- dans le cas où on produit l'azote à moyenne pureté par distillation d'air, on épure l'air à distiller en hydrogène et en monoxyde de carbone par voie catalytique ;
- pendant lesdites périodes, on soutire l'azote liquide du réservoir, on le fait passer à travers un tronçon de colonne de distillation, on vaporise une première partie du liquide issu de ce tronçon, on fait circuler de bas en haut le gaz obtenu à travers ledit tronçon de distillation, puis on l'injecte éventuellement dans le réservoir, et l'on vaporise le reste du liquide issu dudit tronçon pour obtenir ledit azote à moyenne pureté de réserve, que l'on envoie à la base de la colonne ;
- on épure en monoxyde de carbone l'azote de réserve avant de l'envoyer à la base de la colonne ;
- on récupère l'azote impur vaporisé dans le condenseur de tête en tant que second produit.

L'invention a également pour objet une installation destinée à la mise en oeuvre d'un tel procédé. Cette installation comprend :
- un appareil de production d'azote gazeux à moyenne pureté ;
- une colonne de distillation équipée d'un condenseur de tête ;
- des moyens pour relier la base de la colonne avec l'appareil de production afin d'envoyer de l'azote gazeux à moyenne pureté ;
- un réservoir de stockage d'azote liquide à moyenne pureté;
- des moyens permettant de relier le condenseur soit avec le réservoir soit avec la cuve de la colonne ;
- des moyens de liaison pour relier sélectivement ce réservoir d'une part à la base de la colonne, et d'autre part, au condenseur de tête et des moyens pour soutirer un gaz du condenseur de tête.

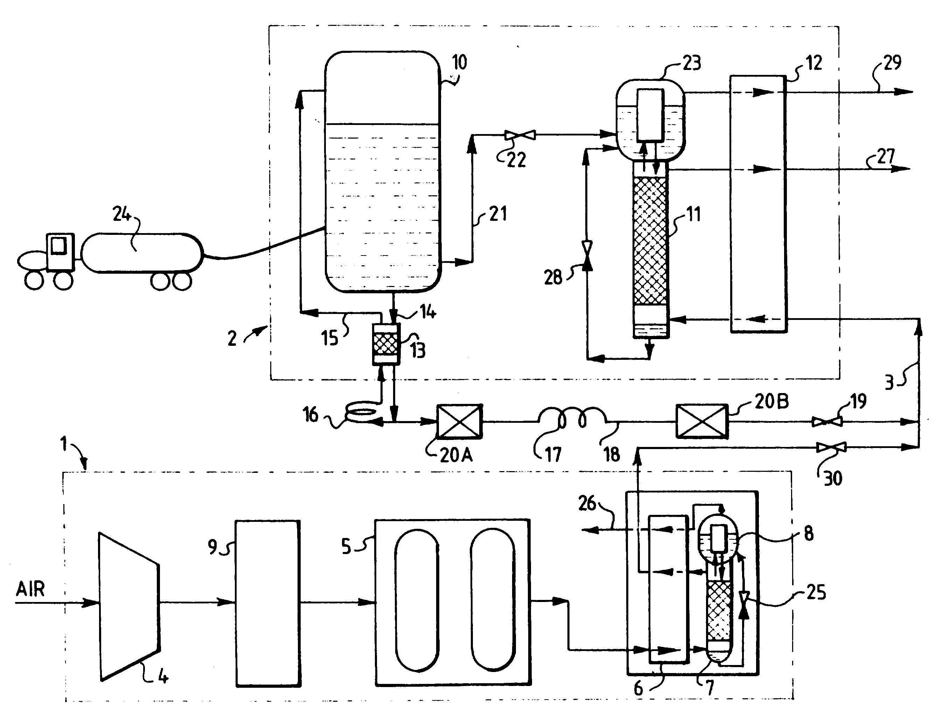

Un exemple de mise en oeuvre de l'invention va maintenant être décrit en regard du dessin annexé, dont la figure unique représente schématiquement une installation de production d'azote ultra-pur conforme à l'invention.

L'installation représentée au dessin comprend deux parties principales, à savoir un appareil 1 de production d'azote gazeux à moyenne pureté, typiquement de l'ordre de 1 ppm, et un appareil d'épuration 2, relié à l'appareil 1 par une conduite 3 véhiculant l'azote à moyenne pureté.

L'appareil 1, du type dit HPN, comprend, de façon classique, un compresseur d'air 4, un dispositif d'adsorption 5, et une boîte froide contenant une ligne d'échange thermique 6 et une colonne de distillation 7 équipée d'un condenseur de tête 8. En plus de ces éléments habituels des installations de type HPN, l'appareil 1 comprend un réacteur catalytique 9 disposé entre le compresseur 4 et l'adsorbeur 5.

L'appareil 1 comprend également des moyens non représentés de maintien en froid, qui peuvent être, suivant la taille de l'appareil, une turbine de détente de liquide riche vaporisé ou des moyens de "biberonnage", c'est-à-dire d'introduction en tête de colonne d'un faible débit d'azote liquide à moyenne pureté provenant d'un stockage approprié.

L'appareil d'épuration 2 comprend essentiellement un réservoir 10 de stockage d'azote liquide à moyenne pureté, typiquement de l'ordre de 1 ppm, une colonne d'épuration Il de même constitution générale que la colonne 7, et une ligne d'échange thermique 12.

Sous le réservoir 10 est disposé un tronçon 13 de colonne de distillation dont une entrée de liquide supérieure est reliée au fond du réservoir par une conduite 14 et dont une sortie de gaz supérieure est reliée au sommet du réservoir par une conduite 15 de mise en pression du réservoir. Une sortie de liquide inférieure du tronçon 13 est reliée d'une part à un premier vaporiseur atmosphérique 16 dont la sortie est reliée à une entrée de gaz inférieure du tronçon 13, et d'autre part à un second vaporiseur atmosphérique 17. La sortie de ce dernier est reliée à un point intermédiaire de la conduite 3 par une conduite 18 équipée d'une vanne d'arrêt 19 et, éventuellement, d'un filtre à monoxyde de carbone 20A en amont du vaporiseur 17 ou 20B en aval de celui-ci.

Une autre conduite 21 équipée d'une vanne de régulation 22 relie le fond du réservoir 10 à la calandre du condenseur de tête 23 de la colonne 11.

Le réservoir 10 peut, lorsque cela est nécessaire, être rempli par un camion-citerne 24.

En fonctionnement normal, le réservoir 10 n'est utilisé que pour le maintien en froid de la colonne 11 par "biberonnage", au moyen d'un faible débit d'azote liquide de l'ordre de quelques % de la production d'azote, et la vanne 19 est fermée. L'air à traiter est comprimé en 4 à une pression quelque peu supérieure à la pression de production de l'azote ultra-pur, épuré en hydrogène et en monoxyde de carbone en 9, épuré en eau et en dioxyde de carbone en 5, et introduit dans la boîte froide de l'appareil 1.

Après refroidissement en 6 jusqu'au voisinage de son point de rosée, l'air est introduit à la base de la colonne 7, qui produit en tête de l'azote gazeux à moyenne pureté, réchauffé en 6 puis envoyé dans la conduite 3, et qui produit en cuve du liquide riche contenant les impuretés lourdes de l'air traité. Ce liquide riche, après détente dans une vanne de détente 25, est envoyé dans la calandre du condenseur de tête 8 de la colonne. Le liquide riche vaporisé est réchauffé en 6 puis évacué via une conduite 26 en tant que gaz résiduaire de l'installation. Les passages d'azote du condenseur 8 peuvent être équipés de moyens de recueil des impuretés légères restantes (hélium et néon) et d'envoi de celles-ci dans la calandre du condenseur pour leur évacuation avec le liquide riche vaporisé.

L'azote véhiculé par la conduite 3 est refroidi jusqu'au voisinage de son point de rosée en 12 et introduit à la base de la colonne 11. Celle-ci produit en tête l'azote gazeux ultra-pur de production, qui, après réchauffement en 12, est livré via une conduite 27.

Le reflux de la colonne 11 est obtenu en détendant légèrement dans une vanne de détente 28, par exemple de 1 bar, le liquide de cuve de cette colonne, et en introduisant le liquide détendu dans la calandre du condenseur de tête 23. Ce liquide, après vaporisation, constitue de l'azote gazeux à pureté légèrement dégradée par rapport à celle de l'azote à moyenne pureté, par exemple à 1,5 ppm, et peut être valorisé, après réchauffement en 12, via une conduite 29.

L'appareil 2 peut ainsi produire environ 30% du débit entrant par la conduite 3 sous forme d'azote ultra-pur, et environ 70% de ce débit sous forme d'azote impur, à une pression légèrement inférieure. A titre d'exemple, les pressions peuvent être de l'ordre de 10 bars pour l'azote à moyenne pureté sortant de l'appareil 1, 9 bars pour l'azote ultra-pur, et 8 bars pour l'azote véhiculé par la conduite 29. 11 est à noter que cette différence de pression entre les conduites 27 et 29 est favorable à la sécurité des réseaux s'ils sont interconnectés, l'azote le plus pur étant à la plus haute pression.

En cas de panne de l'appareil 1, ou bien si la demande en azote ultra-pur dépasse les possibilités de cet appareil, on ouvre les vannes 19 et 22, et on ferme éventuellement une vanne d'arrêt 30 prévue sur la conduite 3.

Du liquide du réservoir 10, épuré en produits légers par son passage dans le tronçon de distillation 13, est vaporisé en 17, épuré éventuellement en monoxyde de carbone en 20A ou 20B, et introduit dans la conduite 3 pour subir le même traitement d'épuration que décrit plus haut. Les impuretés lourdes contenues dans l'azote liquide du réservoir 10 s'éliminent dans la colonne 11, en se rassemblant en cuve de colonne, tandis que les impuretés légères encore présentes sont éliminées dans le condenseur 23 comme expliqué plus haut au sujet du condenseur 8.

Pendant ce mode de fonctionnement, le refroidissement du condenseur 23 est complété ou assuré totalement par de l'azote liquide à moyenne pureté provenant du réservoir 10 via la conduite 21.

Le réservoir 10 est constamment maintenu à la pression nécessaire grâce au vaporiseur 16, au moyen d'une régulation appropriée bien connue dans la technique et non représentée.

On voit que l'appareil d'épuration 2 permet de garantir de façon économique la continuité de la livraison de l'azote ultra-pur, et ce de manière très fiable puisque l'ensemble de cet appareil est entièrement statique et ne comporte aucune pièce en mouvement. La seule condition à vérifier est la présence permanente d'azote liquide ordinaire, c'est-à-dire à moyenne pureté, dans le réservoir 10.

## Revendications

1. Procédé de production d'azote ultra-pur sous pression dans lequel :
- on produit de l'azote à moyenne pureté dans une installation de l'air sensiblement sous la pression de production ;
- on envoie cet azote à la base d'une colonne de distillation (11) équipée d'un condenseur de tête (23) ;
- on refroidit ce condenseur de tête au moyen de liquide de cuve de la colonne détendu et/ou d'un premier débit d'azote liquide à moyenne pureté contenu dans un réservoir de stockage ;
- on soutire l'azote ultra-pur de production en tête de la colonne ;
- pendant les périodes d'arrêt de la production d'azote à moyenne pureté et pendant les périodes où la demande en azote ultra-pur est excessive par rapport à cette production, on envoie à la base de la colonne de l'azote gazeux de réserve à moyenne pureté obtenu à partir de l'azote liquide dudit réservoir de stockage ; et caractérisé en ce :
- on envoie l'azote à moyenne pureté, produit dans l'installation de l'air directement dans la colonne de distillation (11) sous forme gazeuse ;
- on envoie dans le condenseur de tête un second débit, supérieur audit premier débit s'il y en a un, d'azote liquide de ce réservoir ; et
- on valorise par la vaporisation d'azote liquide provenant du réservoir, l'azote gazeux produit.

2. Procédé selon la revendication 1, dans lequel on produit l'azote à moyenne pureté par distillation d'air, caractérisé en ce qu'on épure l'air à distiller en hydrogène et en monoxyde de carbone par voie catalytique (en 9).

3. Procédé selon la revendication 1 ou 2, caractérisé en ce que, pendant lesdites périodes, on soutire l'azote liquide du réservoir (10), on le fait passer à travers un tronçon de colonne de distillation (13), on vaporise une première partie du liquide issu de ce tronçon, on fait circuler de bas en haut le gaz obtenu à travers ledit tronçon de distillation, puis on l'injecte éventuellement dans le réservoir, et l'on vaporise le reste du liquide issu dudit tronçon (13) pour obtenir ledit azote à moyenne pureté de réserve, que l'on envoie à la base de la colonne (11).

4. Procédé selon l'une quelconque des revendications 1 à 3, caractérisé en ce qu'on épure en monoxyde de carbone l'azote de réserve (en 20A ou 20B) avant de l'envoyer à la base de la colonne (11).

5. Procédé selon l'une quelconque des revendications 1 à 4, caractérisé en ce qu'on récupère l'azote impur vaporisé dans le condenseur de tête (23) en tant que second produit.

6. Installation de production d'azote ultra-pur sous pression, comprenant :
- un appareil (1) de production d'azote gazeux à moyenne pureté ;
- une colonne de distillation (11) équipée d'un condenseur de tête (23);
- des moyens (3) pour relier la base de la colonne avec l'appareil de production afin d'envoyer de l'azote gazeux à moyenne pureté ;
- un réservoir (10) de stockage d'azote liquide à moyenne pureté ;
- des moyens (21, 22, 28) permettant de relier le condenseur soit avec le réservoir soit avec la cuve de la colonne ;
- des moyens de liaison (18, 21) pour relier sélectivement ce réservoir d'une part à la base de la colonne, et d'autre part, au condenseur de tête ; et
- des moyens (29) pour soutirer un gaz du condenseur de tête.

7. Installation selon la revendication 6, caractérisée en ce que l'appareil (1) de production d'azote à moyenne pureté comprend un compresseur d'air (4), un réacteur catalytique (9) d'épuration en hydrogène et en monoxyde de carbone, un dispositif d'adsorption (5) d'épuration en eau et en dioxyde de carboné, une colonne (7) de séparation d'air par distillation produisant l'azote à moyenne pureté en tête, et une ligne d'échange thermique (6) assurant par échange de chaleur indirect le refroidissement de l'air jusqu'au voisinage de son point de rosée et le réchauffement des produits sortant de la colonne de séparation (7).

8. Installation selon la revendication 6 ou 7, caractérisée en ce qu'au réservoir de stockage (10) est associé un tronçon (13) de colonne de distillation comportant une entrée supérieure de liquide reliée au fond du réservoir, une sortie supérieure de gaz reliée éventuellement à la partie supérieure du réservoir, une entrée inférieure de gaz, et une sortie inférieure de liquide reliée d'une part, via un premier vaporiseur (16), à l'entrée inférieure de gaz et, d'autre part, via un deuxième vaporiseur (17), à la base de la colonne par une conduite (18) équipée d'une vanne d'arrêt (19).

9. Installation selon l'une quelconque des revendications 6 à 8, caractérisée en ce que lesdits moyens (18) reliant le réservoir à la base de la colonne comprennent un filtre (20A, 20B) d'épuration de l'azote de réserve en monoxyde de carbone.

## Patentansprüche

1. Verfahren zur Herstellung von ultrareinem Stickstoffunter Druck, bei dem
- Stickstoff mittlerer Reinheit in einer Luftzerlegungsvorrichtung ungefähr unter Produktionsdruck hergestellt wird;
- der Stickstoff in den Basisbereich einer mit einem Kopfkondensator (23) versehenen Destillationssäule (11) geleitet wird;
- der Kopfkondensator mittels entspannter Flüssigkeit aus dem Sumpf der Säule und/oder eines ersten, in einem Speicherreservoir enthaltenen Flüssigstickstoffstromes mittlerer Reinheit gekühlt wird;
- der ultrareine Produktionsstickstoff am Kopf der Säule entnommen wird;
- während der Perioden, in denen kein Stickstoff mittlerer Reinheit hergestellt wird, und während der Perioden, in denen der Bedarf an ultrareinem Stickstoff im Vergleich dazu äußerst hoch ist, gasförmiger, aus dem Flüssigstickstoff des Speicherreservoirs erhaltener Vorratsstickstoff mittlerer Reinheit in den Basisbereich der Säule geleitet wird; dadurch gekennzeichnet, daß
- der in der Luftzerlegungsvorrichtung hergestellte Stickstoff mittlerer Reinheit in gasförmigem Zustand direkt in die Destillationssäule (11) geleitet wird;
- ein zweiter Flüssigstickstoffstrom aus dem Reservoir in den Kopfkondensator oberhalb des ersten Stroms, wenn dort ein solcher ist, geleitet wird; und
- der gasförmige Produktionsstickstoff durch die Verdampfung von aus dem Reservoir stammenden Flüssigstickstoff gewonnen wird.

2. Verfahren nach Anspruch 1, wobei der Stickstoff mittlerer Reinheit mittels Luftdestillation hergestellt wird, dadurch gekennzeichnet, daß die zu destillierende Luft von Wasserstoff und Kohlenmonoxid auf katalytischem Wege (in 9) gereinigt wird.

3. Verfahren nach Anspruch 1 oder 2, dadurch gekennzeichnet, daß während der genannten Perioden der Flüssigstickstoffdem Reservoir (10) entnommen wird, durch einen Abschnitt (13) der Destillationssäule geleitet wird, ein erster Teil der aus diesem Abschnitt stammenden Flüssigkeit verdampft wird, das erhaltene Gas von unten nach oben durch den Abschnitt zirkuliert wird, dann gegebenenfalls in das Reservoir eingeleitet wird, und der aus dem Abschnitt (13) stammende Flüssigkeitsrest verdampft wird, um den Vorratsstickstoff mittlerer Reinheit zu erhalten, der in den Basisbereich der Säule (11) eingeleitet wird.

4. Verfahren nach einem der Ansprüche 1 bis 3, dadurch gekennzeichnet, daß der Vorratsstickstoffvon Kohlenmonoxid gereinigt wird (in 20A oder 20B), bevor er in den Basisbereich der Säule (11) geleitet wird.

5. Verfahren nach einem der Ansprüche 1 bis 4, dadurch gekennzeichnet, daß der im Kopfkondensator (23) verdampfte Rohstickstoff als zweites Produkt gewonnen wird.

6. Anlage zur Herstellung von ultrareinem Stickstoff unter Druck, umfassend
- eine Vorrichtung (1) zur Herstellung von gasförmigem Stickstoff mittlerer Reinheit;
- eine mit einem Kopfkondensator (23) versehene Destillationssäule (11);
- Mittel (3) zur Verbindung des Basisbereichs der Säule mit der Herstellvorrichtung, um den gasförmigen Stickstoff mittlerer Reinheit einzuleiten;
- ein Speicherreservoir (10) für Flüssigstickstoff mittlerer Reinheit;
- Mittel (21, 22, 28) zum Verbinden des Kondensators entweder mit dem Reservoir oder mit dem Sumpf der Säule;
- Verbindungsmittel (18, 21), um das Reservoir selektiv zum einen Teil mit dem Basisbereich der Säule und zum anderen Teil mit dem Kopfkondensator zu verbinden; und
- Mittel (29), um dem Kopfkondensator ein Gas zu entnehmen.

7. Anlage nach Anspruch 6, dadurch gekennzeichnet, daß die Vorrichtung (1) zur Herstellung von Stickstoff mittlerer Reinheit einen Luftverdichter (4), einen katalytischen Reaktor (9) zur Reinigung von Wasserstoff und Kohlenmonoxid, eine Adsorptionsvorrichtung (5) zur Reinigung von Wasser und Kohlendioxid, eine Säule (7) zur Luftzerlegung mittels Destillation, wobei Stickstoff mittlerer Reinheit am Kopf hergestellt wird, und einen Wärmeaustauscher (6), der mittels indirektem Wärmeaustausch die Abkühlung der Luft bis nahe an ihren Taupunkt und die Anwärmung der die Zerlegungssäule (7) verlassenden Produkte gewährleistet, umfaßt.

8. Anlage nach Anspruch 6 oder 7, dadurch gekennzeichnet, daß das Speicherreservoir (10) mit einem Abschnitt (13) der Destillationssäule verbunden ist, die einen mit dem Boden des Reservoirs verbundenen oberen Flüssigkeitseinlaß, einen gegebenenfalls mit dem oberen Bereich des Reservoirs verbundenen oberen Gasauslaß, einen unteren Gaseinlaß und einen unteren Flüssigkeitsauslaß umfaßt, der zum einen Teil über einen ersten Verdampfer (16) mit dem unteren Gaseinlaß und zum anderen Teil über einen zweiten Verdampfer (17) mit dem Basisbereich der Säule mittels einer mit einem Absperrventil (19) versehenen Leitung (18) verbunden ist.

9. Anlage nach einem der Ansprüche 6 bis 8, dadurch gekennzeichnet, daß die das Reservoir mit dem Basisbereich der Säule verbindenden Mittel (18) einen Filter (20A, 20B) zur Reinigung des Vorratsstickstoffs von Kohlenmonoxid umfassen.

## Claims

1. Process for producing ultra-pure nitrogen under pressure wherein :
- medium purity nitrogen is produced in an air plant substantially under the production pressure;
- this nitrogen is conveyed to the base of a distillation column (11) fitted with a top condenser (23);
- this top condenser is cooled by means of liquid from the bottom of the column, reduced in pressure, and/or by means of a first stream of medium purity liquid nitrogen contained in a storage reservoir;
- ultra-pure nitrogen is withdrawn as a product from the top of the column;
- during periods when there is a break in the production of medium purity nitrogen and during periods where the demand for ultra-pure nitrogen is excessive in relation to this production, a reserve quantity of medium purity gaseous nitrogen obtained from the liquid nitrogen in the said storage reservoir is conveyed to the base of the column; and characterized in that :
- medium purity nitrogen, produced in the air plant, is conveyed directly to the distillation column (11) in gaseous form;
- a second stream of liquid nitrogen from this reservoir, greater than the said first stream, if there is one, is conveyed to the top condenser; and
- the gaseous nitrogen produced is recovered by vaporizing liquid nitrogen coming from the reservoir.

2. Process according to claim 1, wherein medium purity nitrogen is produced by distilling air, characterized in that the air to be distilled is purified from hydrogen and carbon monoxide by a catalytic method (in 9).

3. Process according to claim 1 or 2, characterized in that, during the said periods, liquid nitrogen is withdrawn from the reservoir (10), it is passed through a length of distillation column (13), a first part of the liquid coming from this section is vaporized, the gas obtained is circulated upwards through the said distillation section, it is then optionally injected into the reservoir and the remainder of the liquid coming from the said section (13) is vaporized to obtain the said reserve medium purity nitrogen, which is conveyed to the base of the column (11).

4. Process according to any one of claims 1 to 3, characterized in that the reserve nitrogen is purified from carbon monoxide (in 20A or 20B) before it is conveyed to the base of the distillation column (11).

5. Process according to any one of claims 1 to 4, characterized in that impure nitrogen vaporised in the top condenser (23) is recovered as a second product.

6. Plant for producing ultra-pure nitrogen under pressure comprising :
- an apparatus (1) for producing medium purity gaseous nitrogen;
- a distillation column (11) equipped with a top condenser (23);
- means (3) for connecting the base of the column to the production apparatus so as to convey the medium purity gaseous nitrogen;
- a reservoir (10) for storing medium purity liquid nitrogen;
- means (21, 22, 28) enabling the condenser to be connected either to the reservoir or to the bottom of the column;
- means of connection (18, 21) for selectively connecting this reservoir on the one hand to the base of the column, and on the other hand to the top condenser; and
- means (29) for withdrawing gas from the top condenser.

7. Plant according to claim 6, characterized in that the apparatus (1) for producing medium purity nitrogen comprises an air compressor (4), a catalytic reactor (9) for purifying from hydrogen and carbon monoxide, an adsorption device (5) for purifying from water and carbon dioxide, a column (7) for separating air by distillation producing medium purity nitrogen at the top, and a heat exchange line (6) for cooling the air by indirect heat exchange near to its dew point and for heating the products leaving the separating column (7).

8. Plant according to claim 6 or 7, characterized in that there is associated with the storage reservoir (10) a length of distillation column (13) comprising an upper liquid inlet connected to the bottom of the reservoir, an upper gas outlet optionally connected to the upper part of the reservoir, a lower gas inlet, and a lower liquid outlet connected on the one hand, via a first vaporizer (16), to the lower gas inlet and, on the other hand, via a second vaporizer (17), to the base of the column by a pipe (18) equipped with a shut-off valve (19).

9. Plant according to any one of claims 6 to 8,
characterized in that the said means (18) connecting the reservoir to the base of the column comprise a filter (20A, 20B) for purifying the reserve nitrogen from carbon monoxide.
